# EUROPEAN PATENT APPLICATION

(11) **EP 2 899 832 A1**
(43) Date of publication of application: **29.07.2015**
(21) Application number: 12882538.7
(22) Date of filing: 03.08.2012
(51) Int. Cl.: H02J 7/00, H02J 7/02

(54) **CHARGING STATION SYSTEM OF AUTOMATIC WORKING DEVICE**

(30) Priority: 02.08.2012 CN 201210272453
(71) Applicant: Sumec Hardware & Tools Co. Ltd., Nanjing, Jiangsu 210006 (CN)
(72) Inventor: ZHOU, Guoyang, Nanjing Jiangsu 210006 (CN); XUE, Yulei, Nanjing Jiangsu 210006 (CN)
(74) Representative: Hryszkiewicz, Danuta
(86) International application number: PCT/CN2012/079664
(87) International publication number: WO 2014/019224

(57) **Abstract**

Provided is a charging station system of an automatic working device that comprises a charging station (1) and an automatic working device (2). The charging station (1) comprises a baseboard (7). A charging box (8) is disposed on the baseboard (7). A first charging end (9) is disposed at the top of the charging box (8). A second charging end (14) matching the first charging end (9) is disposed at the bottom of the automatic working device. When the automatic working device needs to be charged, the automatic working device can automatically drives in the charging station (1). The second charging end (14) keeps contact with the first charging end (9). The charging station charges the automatic working device. The structure of the charging station system is simple, accurate and reliable butt joint between the automatic working device and the charging station is implemented through elastic contact between the charging ends, and a reliable charging function is achieved.

## Description

### DESCRIPTION

The invention relates to a charging station system, and more particularly to a charging station system adapted to charging an automatic working device.

Automatic working devices, such as automatic mower and automatic cleaner, are already available on the market. These devices, generally including an energy storage unit, a control unit, and a drive unit, are often restricted in a special region to work. The automatic working devices work in the special region automatically thereby easing the labor burden. When designing this kind of automatic working device, the key point is to ensure the machine can automatically accurately return to a charging station for charging before the energy is exhausted. As a result, there are various charging station systems on the market. EP1302147B1 discloses a charging station system for an automatic charging device, including a charging station and an automatic working tool. The charging station includes a lifting structure including a first transmission section. The automatic charging device includes a second transmission section. The energy transmission can be achieved by leaning the second transmission section against the first transmission section. EP2073088B1 discloses a charging station system including a charging station and a robot. The charging station includes a first transmission section. The robot includes a second transmission section in the front. When the robot enters the charging station, the transmission section leans against the first transmission section thereby achieving charging. At least one of the first transmission section and the second transmission section is magnetic, so that the first transmission section and the second transmission section are attracted to each other thereby ensuring better contact.

It is one objective of the invention to provide a charging station system adapted to charging an automatic working device that can ensure, when the automatic working device is in a mode of returning for charging, the accurate and reliable butting of the automatic working device and the charging station, and the better contact of the charging connectors.

The objective of the invention is achieved according to following technical schemes.

A charging station system adapted to charging an automatic working device, the system comprises a charging station and an automatic working device. The charging station comprises a base plate comprising a charging case. The charging case comprises a first charging connector. The automatic working device comprises a second charging connector corresponding to the first charging connector. The automatic working device is adapted to travel into the charging station for charging when charging is required. The first charging connector is disposed at a top of the charging case; the second charging connector is disposed at a bottom of the automatic working device; after the automatic working device travels into the charging station, the second charging connector contacts the first charging station so that the charging station charges the automatic working station.

The base plate comprises a step; when wheels of the automatic working device in the vicinity of the second charging connector climbs on the step, a height of a lowest end of the second charging connector is larger than a height of the first charging connector; when the wheels of the automatic working device in the vicinity of the second charging connector goes over the step, the second charging connector contacts the first charging connector.

The first charging connector comprises a first charging plate and a second charging plate; the first charging plate and the second charging plate are disposed on a top surface of the charging case along a width direction thereof; the second charging connector comprises a first charging pillar and a second charging pillar; the first charging pillar and the second charging pillar are disposed at the bottom of the automatic working device along a width direction thereof, and protrude downwards; when the automatic working device travels into the charging station, the first charging pillar contacts the first charging plate, and the second charging pillar contacts the second charging plate.

The first charging plate and/or the first charging pillar are resilient in a height direction thereof.

The second charging plate and/or the second charging pillar are resilient in a height direction thereof.

When the automatic working device travels into the charging station, the second charging connector is over and flexibly contacts the first charging connector; and the first charging connector and/or the second charging connector are resilient in a vertical direction thereof.

Advantages of the invention are summarized as follows. The charging station system of the invention has a simple structure, and have low requirement for connection accuracy of the automatic working device and the charging station. The charging connectors are in a flexible contact, so the contact is accurate and reliable, thereby achieving the automatic charging.
FIG. 1 is a schematic diagram of a charging station system of the invention;
FIG. 2 is a schematic diagram of a charging station of the invention;
FIG. 3 is a schematic diagram of an automatic working device of the invention;
FIG. 4 is a sectional view of an automatic working device taken from line A-A in FIG. 3 of the invention; and
FIGs. 5A-5C show an automatic working device stays at different positions of a step of a charging station when the automatic working device returns for charging.

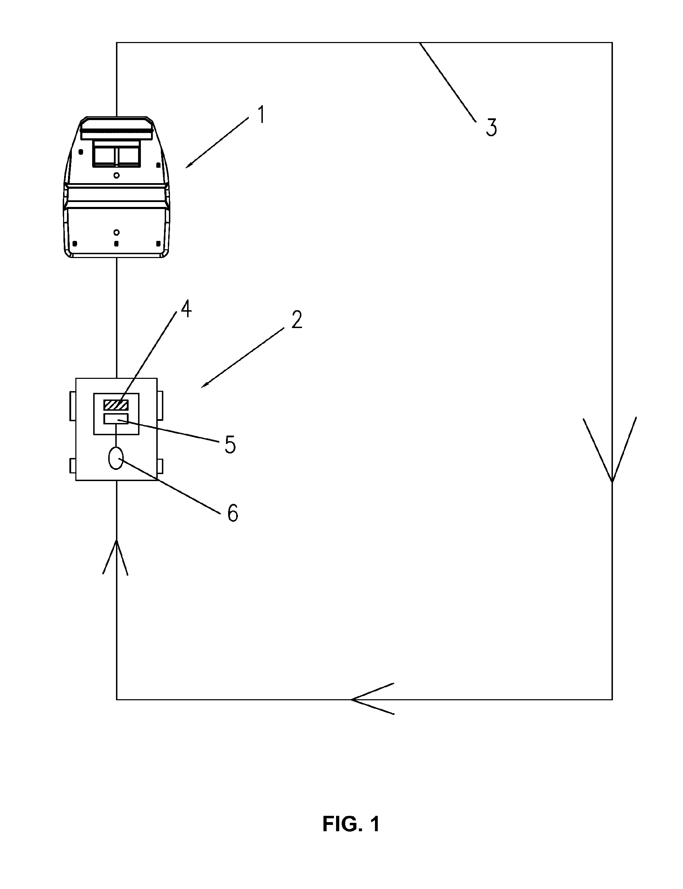

As shown in FIG. 1, a charging station system adapted to charging an automatic working device of the invention comprises a charging station 1 and an automatic working device 2. The automatic working device 2 is restricted to work in a special region 3. The invention employs a cable conductor as a working boundary of the automatic working device 2. The automatic working device 2 is restricted to work in the special region 3 formed by the cable conductor. The automatic working device 2 comprises an energy storage unit 4, a control unit 5, and a drive unit 6. The energy storage unit 4 supplies energy for the automatic working unit 2. Preferably, the energy storage unit 4 is a storage battery. The control unit 5, in the form of a microprocessor in general, operates to control the moving mode of the automatic working unit 2 (such as, moving, turning, starting the work head, returning to the charging station, etc.). The drive unit 6 supplies driving force for the automatic working unit 2. Preferably, the drive unit 6 is a motor, particularly a DC motor.

When the control unit 5 of the automatic working unit 2 detects the energy of the energy storage unit 4 requires to be recharged, it controls the automatic working unit 2 to returns to the charging station 1 for charging, for example, the automatic working station 1 returns to the charging station 1 for charging along the special region 3 formed by the cable conductor following the direction indicated by the arrow.

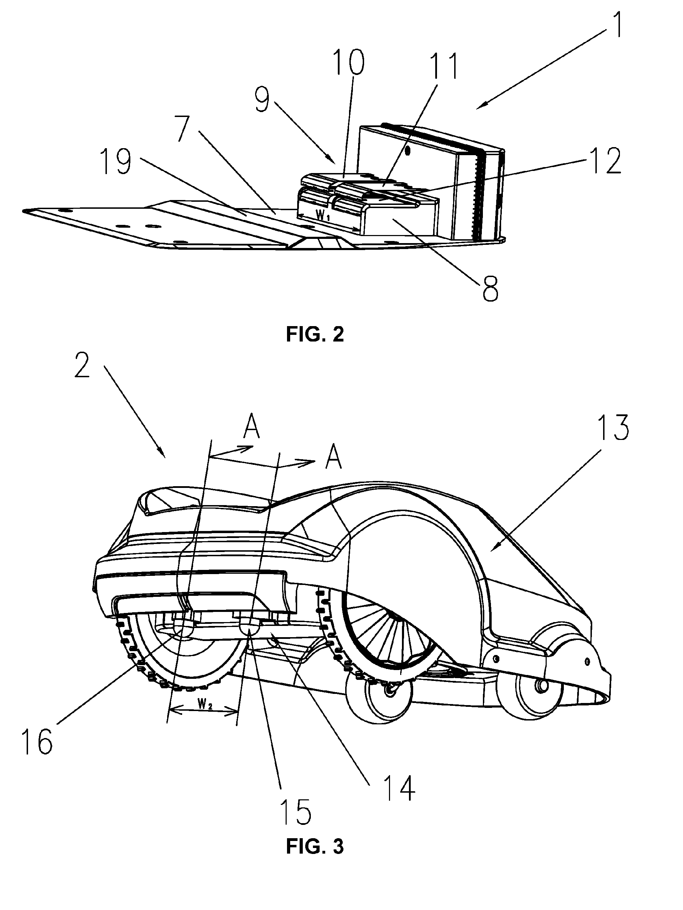

As shown in FIG. 2, the charging station 1 comprises a base plate 7. A charging case 8 is disposed on the base plate 7. A first charging connector 9 is disposed on the top of the charging case 8. The first charging connector 9 comprises a first charging plate 10 and a second charging plate 11. The first charging plate 10 and the second charging plate 11 are disposed on a top surface 12 of the charging case along the width direction W₁ thereof.

FIG.3 shows the schematic diagram of the automatic working device, which comprises a main body 13, and the energy storage unit 4, the control unit 5, and the drive unit 6 (not shown in FIG. 3) are disposed inside the main body 13. To fulfill the charging operation, a second charging connector 14 corresponding to the first charging connector 9 is disposed at the bottom of the automatic working device 2. The second charging connector 14 comprises a first charging pillar 15 and a second charging pillar 16. The first charging pillar 15 and the second charging pillar 16 are disposed at the bottom of the automatic working device 2 along the width direction W₂ thereof, and protrude downwards. When the automatic working device travels into the charging station, the first charging pillar 15 contacts the first charging plate 10, and the second charging pillar 16 contacts the second charging plate 11.

As shown in FIG. 2, to ensure the accurate contact between the first charging connector 9 and the second charging connector 14, the base plate 7 comprises a step 19. When wheels of the automatic working device 2 in the vicinity of the second charging connector 14 climbs on the step 19, a height of a lowest end of the second charging connector 14 is larger than a height of the first charging connector 9. When the wheels of the automatic working device 2 in the vicinity of the second charging connector 14 goes over the step 19, the second charging connector 14 contacts the first charging connector 9.

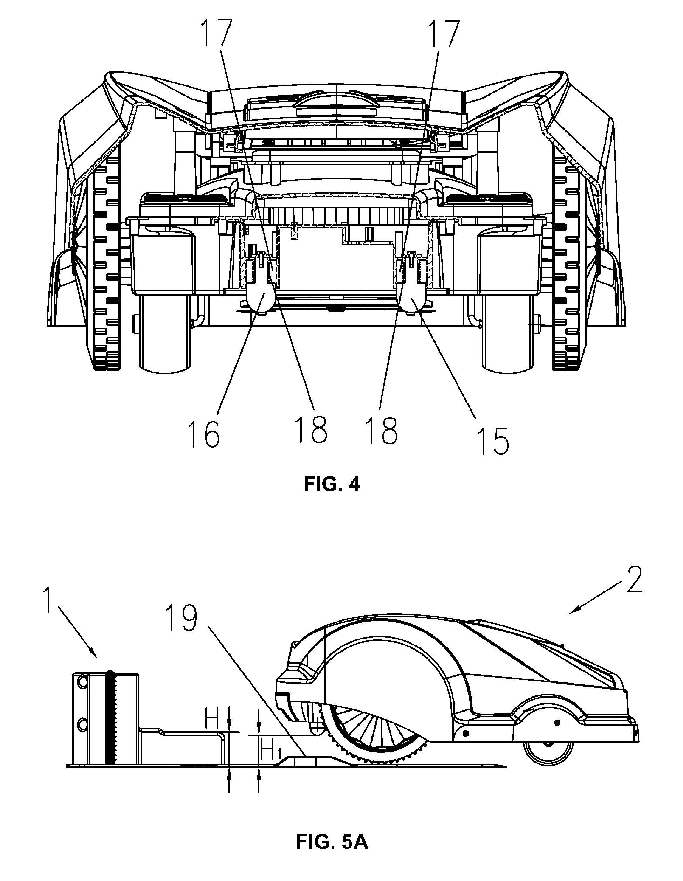

To ensure the reliable contact between the first charging connector 9 and the second charging connector 14, preferably, at least one of the first charging connector 9 and second charging connector 14 is resilient in the height direction thereof. As shown in FIG. 4, take the second charging connector 14 as an example, the first charging pillar 15 and the second charging pillar 16 of the second charging connector 14 are disposed in a chamber 17 at the bottom of the main body 13. The chamber comprises a spring 18 inside, and the spring 18 is embedded in and presses the first charging pillar 15 and the second charging pillar 16 downwards. When the automatic working device 2 returns to the charging station 1 for charging, the second charging connector 14 contacts the first charging connector 9. Under the action of the spring 18, the charging pillars of the second charging connector 14 reliably lean against the charging plates of the first charging connector 9.

Combined with FIGs. 2-4 and FIGs. 5A-5C, the charging process of the automatic working device 2 in the charging station 1 is summarized as follows.

When the automatic charging device 2 is in a mode of return for charging, the control unit 5 (not shown in the figure) controls the automatic working device to return to the charging station 1. Before the wheels of the automatic working device 2 in the vicinity of the second charging connector 14 climbs on the step 19, as shown in FIG. 5A, the height H₁ of the lowest end of the second charging connector 14 is smaller than the height H of the first charging connector 9.

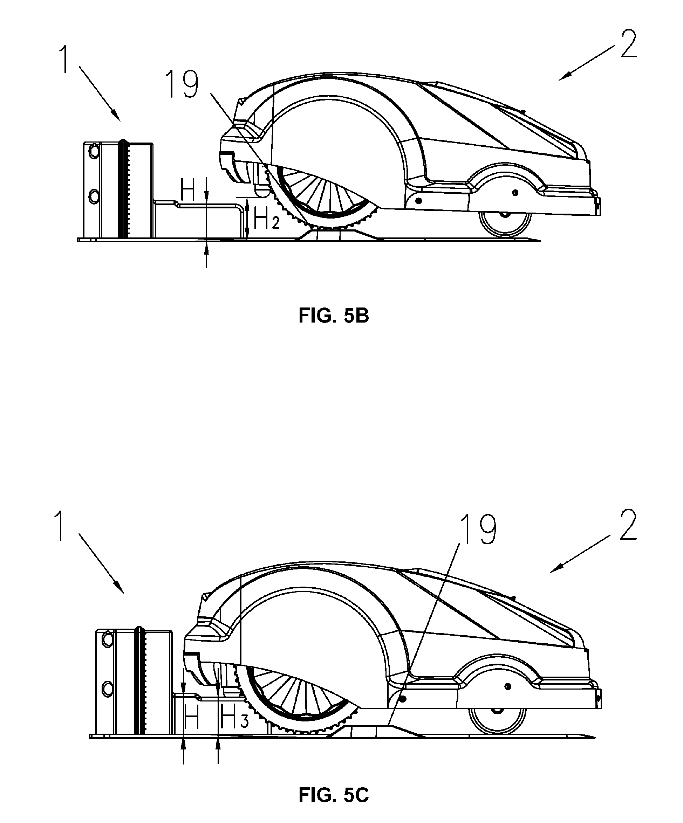

When the wheels of the automatic working device 2 in the vicinity of the second charging connector 14 climbs on the step 19, as shown in FIG. 5B, the height H₂ of the lowest end of the second charging connector 14 is larger than the height H of the first charging connector 9.

As shown in FIG. 5C, when the wheels of the automatic working device 2 in the vicinity of the second charging connector 14 goes over the step 19, the first charging pillar 15 and the second charging pillar 16 of the second charging connector 14 reliably lean against the first charging plate 10 and the second charging plate 11 of the first charging connector 9, respectively, under the push and press of the spring 18. As a result, the height H₃ of the lowest end of the second charging connector 14 is equal to the height H of the first charging connector 9, whereby charging the automatic working device 2 by the charging station 1.

While particular embodiments of the invention have been shown and described, it will be obvious to those skilled in the art that changes and modifications may be made without departing from the invention in its broader aspects, and therefore, the aim in the appended claims is to cover all such changes and modifications as fall within the true spirit and scope of the invention.

## Claims

1. A charging station system adapted to charging an automatic working device, the system comprising a charging station and an automatic working device; the charging station comprising a base plate comprising a charging case; the charging case comprising a first charging connector; the automatic working device comprising a second charging connector corresponding to the first charging connector; the automatic working device being adapted to travel into the charging station for charging when charging is required; **characterized in that** the first charging connector is disposed at a top of the charging case; the second charging connector is disposed at a bottom of the automatic working device; after the automatic working device travels into the charging station, the second charging connector contacts the first charging station so that the charging station charges the automatic working station.

2. The system of claim 1, **characterized in that** the base plate comprises a step; when wheels of the automatic working device in the vicinity of the second charging connector climbs on the step, a height of a lowest end of the second charging connector is larger than a height of the first charging connector; when the wheels of the automatic working device in the vicinity of the second charging connector goes over the step, the second charging connector contacts the first charging connector.

3. The system of claim 1 or 2, **characterized in that** the first charging connector comprises a first charging plate and a second charging plate; the first charging plate and the second charging plate are disposed on a top surface of the charging case along a width direction thereof; the second charging connector comprises a first charging pillar and a second charging pillar; the first charging pillar and the second charging pillar are disposed at the bottom of the automatic working device along a width direction thereof, and protrude downwards; when the automatic working device travels into the charging station, the first charging pillar contacts the first charging plate, and the second charging pillar contacts the second charging plate.

4. The system of claim 3, **characterized in that** the first charging plate and/or the first charging pillar are resilient in a height direction thereof.

5. The system of claim 3, **characterized in that** the second charging plate and/or the second charging pillar are resilient in a height direction thereof.

6. The system of claim 1, **characterized in that** when the automatic working device travels into the charging station, the second charging connector is over and flexibly contacts the first charging connector; and the first charging connector and/or the second charging connector are resilient in a vertical direction thereof.
